# EUROPEAN PATENT APPLICATION

(11) **EP 2 139 163 A1**
(43) Date of publication of application: **30.12.2009**
(21) Application number: 08305356.1
(22) Date of filing: 27.06.2008
(51) Int. Cl.: H04L 12/24, H04L 12/26

(54) **Method and device for activating an optimized configuration in a network element of a wireless or wireline network**

(71) Applicant: Alcatel Lucent, 75008 Paris (FR)
(72) Inventor: Leclerc, Brice, 91290 Arpajon (FR); Bousquet, Thierry, 92140 Clamart (FR); Marce, Olivier, 91300 Massy (FR)
(74) Representative: Korakis-Ménager, Sophie

(57) **Abstract**

The invention relates to a method for activating an optimized configuration in a network element of a wireless or wireline network, characterized in that it comprises the different steps consisting in:
- developing at least one evaluation engine associated with an optimized configuration of said network element;
- memorizing said at least one evaluation engine in a program memory of said network element;
- running said at least one evaluation engine by comparing the two following elements:

- some predetermined conditions associated with said optimized configuration associated with said evaluation engine;
- some parameters of said wireless or wireline network, corresponding to current functioning conditions of said network element in said wireless or wireline network, said parameters being given by said network clement.
- selecting a new optimized configuration among those associated with the at least one evaluation engine.
- activating said selected new optimized configuration in said network element.

## Description

### Background of the invention

### Field of the invention

The present invention deals with a method for activating an optimized configuration in a network element of a wireless or wireline network. The present invention will be described with reference to wireless networks, but it applies also to network elements of wireline network.

The invention relates to cellular, or mobile, or wireless, communication networks; more particularly, the present invention deals with the optimisation of different parameter-able elements, also called network elements, of cellular networks, the optimisation aiming at defining and selecting an optimized configuration, in due time, for these parameterable elements.

In the present context, the expression "parameterable element", which can also be expressed as "network element" refers to any component of a wireless network whose functioning can be managed, that is to say configured, by a network manager of a cellular communication network, such as a network management system (NMS), for example. Thus the network element may be, for example, a network equipment such as a base station, GSM Base Station Controller, UMTS Radio Network Controller, LTE eNodeB, Wimax Access Service Network Gateway.

In the present context, the expression "wireless network", refers to any type of cellular communication network and in particular those of type 2G (such as GSM type networks), type 2.5G (such as GPRS and EDGE networks), type 3G (such as UMTS) or type 4G (LTE and WIMAX networks).

### Description of the prior art

Parameterable elements of wireless networks are the origin of problems and malfunctions that compromise good functioning thereof and in particular compliance with the quality of service covered by service level agreements (SLA) between network operators and their clients. Of these problems and malfunctions, an excessive call drop rate, or an excessive energy consumption, may be cited, for example.

To determine the root cause of a problem or malfunction, and where applicable to propose optimisation action, network operators use optimization tools that are generally integrated into the network management system (NMS) of their network. For example, such tools are based on a causal diagram describing all possible causes of a problem, then the causes of those causes, and so on, as far as one or more root causes.

For example, the root cause of an excessive call drop rate may be a problem with handover (uninterrupted intercellular transfer).

A corrective action generally entails modifying or adapting one or more parameters of one or more network elements associated with a root cause. This correction requires the definition of an optimised configuration of the considered network element.

Nevertheless, optimal configuration of a network element in a Wireless Network varies on time, depending on the usage of the network and the availability of its resources.

Each configuration optimized for some given conditions has to be activated at the right time. Computation of the right time to activate optimized configurations is complex and requires expertise.

Until now, operators trust only some skilled engineers to provide expertise. Such skilled engineers are able to decide when to activate the right configuration he has optimized for frequent, repetitive or well-known used case. In order to define an optimized configuration to download to the network equipments and to activate this configuration in it, such skilled engineers analyse the behaviour of the network, thanks to some counters provided by the considered network elements.

But this method raises many problems: skilled engineer are scarce and expensive; they are not motivated by repetitive tasks, and they are not always available; an important consequence is that this method does not offer the means to manage short time events or multiple events appearing at the same time. Moreover, skilled engineer are warned of the actual state of the network with a delay, which can be quite important.

As a consequence, many drawbacks can be identified:
- configuration of the network is tuned only when skilled engineers are available.
   - skilled engineers have not time enough to rightly configure the network elements for short time events or multiple network elements at same time.
   - skilled engineers waste time with repetitive analysis and tunings.
   - tuning is delayed as network elements do not report their counters immediately.

An object of the invention is thus to solve the above-mentioned problems, which are mainly due to the permanent need of the intervention of skilled engineers to establish an optimized configuration on network elements.

### Summary of the invention

To this end, the invention proposes to equip network elements with evaluation engines dedicated to the evaluation of the correspondence between different conditions observed at a given time in the wireless network, and conditions defined in relation with predetermined optimized configurations. If the conditions match, then the corresponding optimized configuration is considered as the appropriate one to be used in the considered network element. In the invention, once the optimized configurations, and the associated conditions, have been defined, there is no need of the intervention of skilled engineers.

The invention therefore relates to a method for activating an optimized configuration in a network element of a wireless or wireline network, characterized in that it comprises the different steps consisting in:
- developing at least one evaluation engine associated with an optimized configuration of said network element;
- memorizing said at least one evaluation engine in a program memory of said network element;
- running said at least one evaluation engine by comparing the two following elements :
   - some predetermined conditions associated with said optimized configuration associated with said evaluation engine;
   - some parameters of said wireless or wireline network, corresponding to current functioning conditions of said network element in said wireless or wireline network, said parameters being given by said network element.
- selecting a new optimized configuration among those associated with the at least one evaluation engine.
- activating said selected new optimized configuration in said network element.

The method of the invention may have other features, which may be used separately or in combination, and in particular:
- A plurality of evaluation engines are memorized in said program memory of said network element, each evaluation engine being dedicated to one specific optimized configuration.
- The step consisting in selecting the new optimized configuration comprises the different operations consisting in
   - attributing a level of correspondence to each optimized configuration, the more the results of the comparison in the step consisting in running the evaluation engines showing a closeness of the different elements compared, the more the level of correspondence being high.
   - selecting, as the new optimized configuration, the optimized configuration with the highest level of correspondence.
- The step consisting in selecting the new optimized configuration, and/or the step consisting in activating the selected new optimized configuration apply only if said level of correspondence is higher than a predetermined threshold.
- The method comprises the further step consisting in, if said level of correspondence is not higher than said predetermined threshold, keeping a current configuration active in said network element.
- The step consisting in running the at least one evaluation engine is applied periodically.
- One of the optimized configuration consists in an idle mode configuration in which some TRX cards of said network element arc shutting down.
- One of the condition to apply the idle mode configuration is realised when said network element is a base station which is not overloaded.

Another object of the invention consists in a network element of a wireless or wireline network, in which a specific configuration is applied, characterized in that it comprises:
- a program memory with at least one evaluation engine for comparing the two following elements:
   - some predetermined conditions associated with an optimized configuration associated with said evaluation engine; with
   - some parameters of said wireless or wireline network, corresponding to current functioning conditions of said network element in said wireless or wireline network, said parameters being given by said network element.
- means for selecting a new optimized configuration, among those associated with the at least one evaluation engine.
- means for activating said selected new optimized configuration in said network element.

The network element of the invention may have other features, which may be used separately or in combination, and in particular:
- Said program memory memorizes a plurality of evaluation engines, each evaluation engine being dedicated to one specific optimized configuration.
- The network element comprises:
   - means for attributing a level of correspondence to each optimized configuration, the more the results of the comparison in the step consisting in running the evaluation engines showing a closeness of the different elements compared, the more the level of correspondence being, high.
   - means for selecting and/or activating, as the new optimized configuration, the optimized configuration with the highest level of correspondence.
- The network element comprises:
   - a data memory, in which a predetermined threshold is memorized;
   - means for comparing said predetermined threshold with said level of correspondence of said new optimized configuration selected;
   - means for selecting said new optimized configuration only if said level of correspondence is higher than said predetermined threshold.

Other features and advantages of the invention will become apparent on reading the following detailed description and examining the appended drawing.

Further characteristic features and advantages of the invention are set out in the following description

### Brief description of the drawing

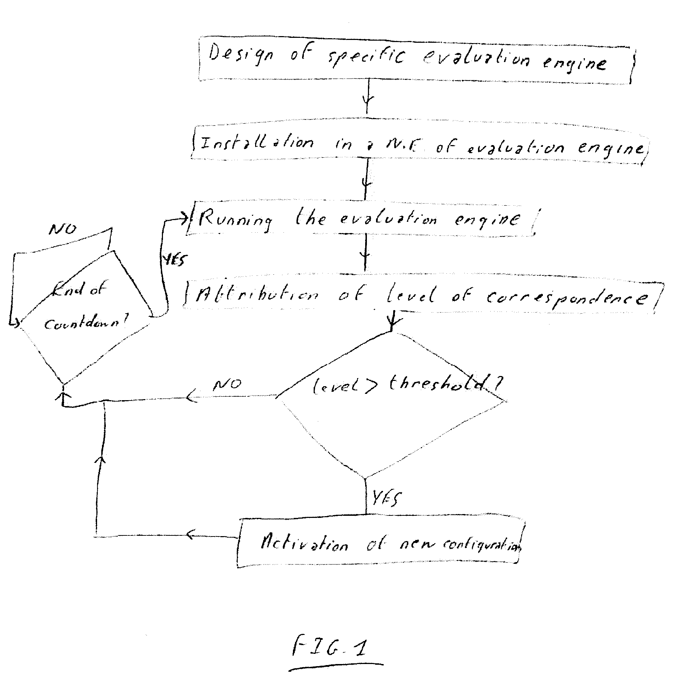

Fig.1 is a flow chart illustrating the different steps of one example of the method according to the invention.

### Detailed description of the preferred embodiment.

The appended drawing constitutes part of the description of the invention as well as contributing to the definition of the invention, if necessary.

A first step 1 of the illustrated example in figure 1 consists in a step of designing specific evaluation engines by a back-office optimizer, or skilled engineer; each evaluation engine is associated with a specific optimized configuration it computes.
Then, a second step 2 consists in a step of providing, through an OMC system,(Operation and Maintenance Center) a network equipment with multiple evaluation engines developed in step 1. An OMC is a system which supervises a set of network elements and manages their updates (software and configuration). On the described example, the network element is provisioned with multiple evaluation engines. Each evaluation engine is dedicated to one possible optimized configuration.
Then, a third step 3 consists in a step of running, in the considered network equipment, each evaluation engine provided in step 2. The evaluation engine reads the data available on the network element, through counters or captors for example. Each engine evaluates if the criteria specified by the skilled engineer are satisfied. These criteria can be for example:
- KPI/KPM (Key Performance Indicator/Measurement such as error rate, handover rate, traffic load, interference level, ...),
- captors,
- calendar,
- current state of each neighbour network equipment,

Then, in a fourth step 4, each evaluation engine computes a score, or level of correspondence, that measures how the current conditions match the conditions for which the corresponding optimized configuration has been prepared. The score can he expressed, for example, as a percentage of matching (0: no match at all, 100%: perfect matching). In order to use the best configuration, network element runs all the engines and, according to their results, selects the configuration that has been optimized for the current conditions.
Then, in a fifth step 5, which is a decision step, the level of correspondence of the selected optimized configuration is compared with a predetermined threshold memorized in a data memory of the network element; if the level of correspondence is higher than the threshold, then the method continues to step 6. Else, the method continues to a decision step 7, corresponding to a countdown, and the current configuration, being used before the last running of evaluation engines, is kept in application.
The step 6 corresponds to a step where the selected optimized configuration is activated in the considered network element, and becomes the new active optimized configuration for the considered network element. Once it has been activated, the method continues with the step 7, corresponding to the countdown.
The countdown 7 starts when step 3 is running. When the countdown comes to its end, step 3, in which the different evaluation engines are activated, starts again. This countdown 7 allows to activate periodically the method according to the invention.
In another possible implementation, the evaluation engines run permanently. Then, an optimized configuration is activated if its evaluation engine keeps the better score during a predetermined moment. The requested moment is as brief as the score is high.
The method of the present invention finds different applications in different contexts.
A first example consists in power saving in base stations.
A lot of resources stay powered-on but unused when network is not loaded. Then, in order to reduce power consumption, base station is provisioned with a so called "idle mode" configuration and its specific evaluation engine.
Each base station runs the evaluation engine of the "idle mode" configuration that continuously checks the load of the considered base station and other prerequisites specified by the skilled engineer.
Thanks to the evaluation engine, the base station can evaluate when conditions are as specified by the skilled engineer. Then the considered base station activates the "idle mode" configuration that shutdowns most of the TRX cards of the base station, reallocates the bandwidth between the remaining active cells and redefines the neighbouring lists. The power saving can be very important in big cities.
A second example consists in commuter trains, which have specific radio propagation constraints. Then the cells along the line are dynamically and temporally configured, thanks to the evaluation engines, with optimized configurations in order to create well suited radio conditions around the train on move.

The main advantages of the present invention consist essentially in the following points:
- Quick adaptation of the Network to actual conditions and identified problems. Increase Quality of Service, availability of the Network and traffic.
- Capitalize on expertise of the skilled engineers who have designed the optimized configurations and their evaluation engines.
- Optimized configuration, tested and validated by expert, is autonomously activated by NE at right time:
   - 24/24,7/7, even if skilled engineer is not available,
   - without delay,
   - short time events are managed,
   - events occurring on multiple network elements at same time are managed.
- Skilled engineer is discharged of repetitive tasks and can focus on complex cases.
   The proposed solution is able to improve efficiency of the network. It has low impact on a network element, as far as said network element is able to switch from a configuration to another one without outage, and can be deployed in short term.

## Claims

1. A method for activating an optimized configuration in a network element of a wireless or wireline network, **characterized in that** it comprises the different steps consisting in:
- developing at least one evaluation engine associated with an optimized configuration of said network element;
- memorizing said at least one evaluation engine in a program memory of said network element;
- running said at least one evaluation engine by comparing the two following elements :
- some predetermined conditions associated with said optimized configuration associated with said evaluation engine;
- some parameters of said wireless or wireline network, corresponding to current functioning conditions of said network element in said wireless or wireline network, said parameters being given by said network element.
- selecting a new optimized configuration among those associated with the at least one evaluation engine.
- activating said selected new optimized configuration in said network element.

2. The method according to claim 1 **characterized in that** a plurality of evaluation engines are memorized in said program memory of said network element, each evaluation engine being dedicated to one specific optimized configuration.

3. The method according to one of the previous claims **characterized in that** the step consisting in selecting the new optimized configurations comprises the different operations consisting in
- attributing a level of correspondence to each optimized configuration, the more the results of the comparison in the step consisting in running the evaluation engines showing a closeness of the different elements compared, the more the level of correspondence being high.
- selecting, as the new active optimized configuration, the optimized configuration with the highest level of correspondence.

4. The method according to claim 3 **characterized in that** the step consisting in selecting the new optimized configuration, and/or the step consisting in activating the selected new optimized configuration apply only if said level of correspondence is higher than a predetermined threshold.

5. The method according to claim 4 **characterized in that** it comprises the further step consisting in, if said level of correspondence is not higher than said predetermined threshold, keeping a current configuration active in said network element.

6. The method according to one of the previous claims **characterized in that** the step consisting in running the at least one evaluation engine is applied periodically

7. The method according to one of the previous claims **characterized in that** one of the optimized configuration consists in an idle mode configuration in which some TRX cards of said network element are shut down.

8. The method according to claim 7 **characterized in that** one of the condition to apply the idle mode configuration is realised when said network element is a base station which is not overloaded.

9. A network element of a wireless or wireline network, in which a specific configuration is applied, **characterized in that** it comprises:
- a program memory with at least one evaluation engine for comparing the two following elements:
- some predetermined conditions associated with an optimized configuration associated with said evaluation engine; with
- some parameters of said wireless or wireline network, corresponding to current functioning conditions of said network element in said wireless or wireline network, said parameters being given by said network element.
- means for selecting a new optimized configuration among those associated with the at least one evaluation engine.
- means for activating said selected new optimized configuration in said network element.

10. The network element according to claim 9 **characterized in that** said program memory memorizes a plurality of evaluation engines, each evaluation engine being dedicated to one specific optimized configuration.

11. The network element according to claim 10 **characterized in that** it comprises:
- means for attributing a level of correspondence to each optimized configuration, the more the results of the comparison in the step consisting in running the evaluation engines showing a closeness of the different elements compared, the more the level of correspondence being high.
- means for selecting and/or activating as the new active optimized configuration, the optimized configuration with the highest level of correspondence.

12. The network element according to claim 11 **characterized in that** it comprises:
- a data memory, in which a predetermined threshold is memorized;
- means for comparing said predetermined threshold with said level of correspondence of said new optimized configuration selected;
- means for selecting said new optimized configuration only if said level of correspondence is higher than said predetermined threshold.
